# EUROPEAN PATENT APPLICATION

(11) **EP 3 287 012 A1**
(43) Date of publication of application: **28.02.2018**
(21) Application number: 16185175.3
(22) Date of filing: 22.08.2016
(51) Int. Cl.: A23L 13/50, A23L 7/157, A23B 4/10, A23P 20/12

(54) **MANUFACTURE OF BREADED FOOD PRODUCTS**

(71) Applicant: Crisp Sensation Holding SA, 1208 Geneva (CH)
(72) Inventor: Michiels, Wilhelmus Johannes Gerardus, 6035 AW Ospel (NL); Van Doorn, Kees, 5036 CL Tilburg (NL)
(74) Representative: Browne, Robin Forsythe

(57) **Abstract**

A method of manufacture of a breaded food product comprising the steps of:
providing a solid or solidified substrate;
applying a coating to the substrate to form a coated substrate;
applying a crumb coating to the coated substrate to form a breaded portion;
heating the breaded substrate to produce a cooked breaded portion;
hermetically packaging the one or more cooked breaded portions within a flexible packaging material to produce a packaged foodstuff; and
subjecting the packaged foodstuff to high pressure processing at a pressure of at least 100MPa to produce a sterilised packaged foodstuff.

## Description

This invention relates to a process for manufacture of breaded food products. The invention also relates to breaded food products made by the process, particularly but not exclusively to food products comprising a substrate having a coating to which one or more layers of breadcrumb are applied. The invention further relates to crumb for use in the process.

Many breaded food products are manufactured by applying one or more coating layers to a substrate followed by a crumb layer, the coating layer causing the crumb layer to adhere to the substrate. The coated products are cooked by frying in oil or in an oven followed by freezing and packaging. The products, particularly meat products which are designed for reheating in a microwave oven must be thoroughly cooked during the frying process because such products may be only thawed but not thoroughly cooked in the microwave oven. However frying of a product for a sufficient period to ensure complete sterilisation may lead to changes in the taste, texture or mouthfeel of the product.

Moisture migration from the substrate to the coating and crumb layers may lead to a loss of crispness, particularly for microwaveable products or for cool-line applications where the breaded product is stored or displayed at temperatures between -10°C and ambient.

High pressure processing (HPP) has been used to improve safety and extend shelf life of food products. High pressure processing is a cold pasteurisation technique by which products, which may be already sealed in the final packages, are introduced into a vessel and subjected to a high level of isostatic pressure (300MPa - 600MPa) transmitted by water. Pressures above 400MPa at cold or ambient temperatures inactivate microorganisms such as bacteria, viruses, yeasts, molds and parasites which may be present in food, extending the shelf-life of the product and guaranteeing food safety.

HPP has been used to sterilise liquids such as purees, sauces and juices. However application to breaded or crumb coated products has not been successful because the high pressures damage or destroy the structure of the crumb and of crumb coatings.

WO 93/03634 describes a method of producing a coated foodstuff which may be reheated by microwave irradiation, the method comprising: applying to the foodstuff a predust; applying a batter to the predusted foodstuff; frying the battered foodstuff, and cooling the fried product.

WO 95/30344 describes a process for microwaveable coated food products comprising the steps of predust application, secondary coated portion application, crumb application, flash frying, freezing and packaging.

WO 97/03572 describes a process for microwaveable coated food products, such as chicken nuggets, comprising the steps of predust application, secondary coated portion application, crumb application, flash frying, freezing and packaging.

WO 10/001101 describes a method of manufacture of a crumb coated food product comprising the steps of: forming an aqueous mixture comprising: flour, sodium bicarbonate, optional additives and water; adding the mixture into an extruder; adding an aqueous gelling agent to the extruder; extruding the resultant mixture at a temperature greater than 100°C to form an expanded porous product; drying the product, and milling the dried product to form a crumb. The crumb so obtained is particularly suitable for use in the preparation of coated food products that are cooked or reheated from a frozen state using a microwave oven.

According to a first aspect of the present invention a method of manufacture of a food product comprises the steps of:
applying a coating to a solid or solidified substrate to form a coated substrate;
applying a crumb coating to the coated substrate to form a breaded portion;
heating the breaded portion to form a cooked breaded portion;
hermetically packaging the cooked breaded portion to form a packaged portion; and treating the packaged portion by high pressure processing.

In particularly advantageous embodiments the crumb coating comprises a milled farinaceous dough extrudate containing 0.05wt% to 5wt% of added hydrocolloid.

The hydrocolloid containing crumb may be made by extrusion of a dough composition comprising flour, water and optional further ingredients, together with added hydrocolloid, wherein the hydrocolloid is added as an aqueous solution after the flour and water have been mixed, in order to provide a homogeneous uniform distribution of the hydrocolloid throughout the extruded dough. Alternatively, solid hydrocolloid may be added to the dry flour and optional further solids to form a mixture in which the hydrocolloid hydrates as the mixture passes along the extruder barrel from the inlet towards the outlet. Addition of a hydrocolloid solution to the initial flour and water mixture, that is before extrusion, is less preferred as the hydrocolloid may form a gel which can impede thorough mixing of the solid and liquid components of the dough.

Additional but optional ingredients of the dough mixture may include sodium bicarbonate, as a raising agent, sodium bisulphite or sodium metabisulphite as a sterilising and bleaching agent, flavourings and colourants.

The crumb may be made by the extrusion process disclosed in WO2010/001101, the disclosure of which is incorporated into this specification by reference for all purposes.

The extrusion process may be controlled so that the extrudate has a low water content so that minimal or no further drying is necessary after extrusion. Alternatively, the drying process disclosed in WO2013/092627, the disclosure of which is incorporated into this specification by reference for all purposes, may be employed.

The hydrocolloid used in the milled extrudate may be any hydrocolloid which forms a gel or otherwise increases viscosity when mixed with water. Preferred hydrocolloids produce a milled extrudate which retains shape when stirred in water having a temperature of 20°C for a period of 60 seconds. Use of a hydrocolloid may provide a degree of water resistance to the milled extrudate reducing any tendency to pick up moisture. Typically, hydrocolloid is contained in the milled extrudate in a concentration of about 0.06wt% to about 4 wt%, more preferably about 0.08wt% to about 3wt% and most preferably about 0.1wt% to about 3wt%.

Examples of hydrocolloids that may be used in the milled farinaceous dough extrudate include: natural gums, modified gums, pectin, alginate, arabinogalactan, agar, carrageenan, furcellaran, xanthan and combinations thereof. Preferably, the hydrocolloid is selected from natural gums and combinations thereof. Use of gelatin or starch is not preferred.

Examples of natural gums that may suitably be employed as a hydrocolloid in the milled farinaceous dough extrudate include; guar gum, xanthan gum, locust bean gum, gum Arabic, tragacanth, gum karaya, gum ghatti, xanthan gum and combinations thereof.

Most preferably, the hydrocolloid is selected from: guar gum, locust bean gum, xanthan gum and combinations thereof.

Alternatively the crumb may be manufactured by conventional methods used for making breadcrumb coating ingredients.

Advantageously, the milled extrudates employed in the bonding crumb and the coating crumb have the same composition.

The bonding crumb and coating crumb may be dried to a low water content before use, for example below 2wt%, preferably below 1.5wt%, more preferably below 1.3wt%.

A suitable drying process is disclosed in EP-B-2606745, the disclosure of which is incorporated into this specification by reference for all purposes.

The edible material contained in the core of the coated food product suitably comprises fish, meat, poultry, shellfish, shrimps, dairy products (for example cheese), ragu, vegetable, fungi and combinations thereof. According to a particularly preferred embodiment animal material selected from fish, meat, poultry, shellfish, shrimps and combinations thereof represents at least 40wt%, even more preferably at least 60wt% and most preferably at least 80wt% of the core of edible material.

According to a preferred embodiment, the portions of solid substrate contain at least 30wt%, preferably at least 50wt% of animal tissue.

The crumb coated substrate may be cooked by any convenient heating means. Preferably the cooking comprises contacting the substrate with heated oil. Frying in hot oil is preferred although an air fryer or oven may be used. The crumb coat substrate may be submerged in hot oil or allowed to cook on the surface of the hot oil and turned over after a period of time to cook both sides at least substantially evenly.

In preferred embodiments the temperature and duration of the heating are sufficient to cause the crumb layer to bind to the substrate. The heating conditions may be readily ascertained by a skilled person. For example frying in oil at 150°C for 1.5 to 2.5 minutes may be suitable. Alternatively a shorter freezing time, for example 30 seconds may be used if only the coating needs to be set.

In certain embodiments frying or cooking using oil is advantageous because ingress of oil between the particles of the breaded coating may protect the crumb against absorption of water due to restriction of water transport during subsequent processing and storage in a freezer or of a product which is stored at a temperature of 2°C to 8°C, preferably 2°C to 5°C.

Preferably the core of edible material has a thickness not greater 50 mm, more preferably of not more than 15 mm, most preferably of not greater than 10 mm. This conveniently allows sufficient penetration of microwave radiation within a period of 2 to 3 minutes using the power available in a typical domestic microwave oven used for final preparation of a food product.

The substrates are generally packaged before sterilisation. Preferably the products are packed under pressure in a sealed gas impermeable bag or other flexible container before high pressure processing. A polymeric bag may be employed. The atmospheric pressure under which the products are packaged may be selected to be a low as possible without causing damage to the products, for example, due to liquid outflow or bubbling of liquid ingredients. The packaging pressure may be determined empirically for each kind of product.

A modified or inert atmosphere may be employed.

The high pressure processed product may be frozen for storage and transportation. However the need for freezing is generally avoided by high pressure processing of the packaged product. Cryogenic freezing and storage in the frozen state can lead to deterioration of the crumb coated product due to the effects of moisture migration into the crumb layer and subsequent absorption of the water into the layer of crumb particles. Also formation of ice crystals which can vaporise on microwave heating may lead to damage of the coating layers.

The present invention arises from the unexpected discovery that crumb manufactured by extrusion of a farinaceous dough extrudate containing added hydrocolloid provides a coating which is not damaged by HPP. The preferred drying of the crumb provides further benefits. This permits crumb coated food products to be pasteurised by HPP without deterioration, avoiding a need to use cryogenic freezing or other means of inhibiting microbial growth. Use of the hydrocolloid containing crumb manufactured as disclosed above improves the storage properties of the coated product by reducing the deleterious water transport into the coating.

High pressure processing in accordance with this invention may be carried out effect of by subjecting the coated products to pressures between 100MPa and 800MPa. The process temperature during pressure treatment may be from below 0°C to above 100°C. A low temperature may be preferred to minimise effects of adiabatic heat. The exposure time at pressure may range from one or more millisecond pulses obtained using oscillating pumps to a treatment time of up to 20 minutes.

In a preferred embodiment the pressure may be increased to a working pressure over a period of 1 to 5 minutes, typically about 2 minutes. The working pressure may be maintained for a period of 1 to 10 minutes, typically 2 to 5 minutes, particularly about 3 minutes; after which the pressure is allowed to return to ambient during a period of 1 to 5 minutes, typically about 2 minutes.

The maximum working pressure, the rate of increase of pressure, the time at the maximum working pressure and the rate of decrease may be selected dependent on the microbial load of the unsterilized products.

Although not essential the method may include a step of heating during HPP in order to achieve an increased rate of inactivation of microbes. The adiabatic heating together with any external heating may be controlled to optimise setting or gelation of the coating layer and binding of the layer to the substrate. An advantage of use of HPP is that the temperature and duration of the frying or other cooking step may be reduced without impairing the degree of binding of the coating to the substrate.

For example, the frying time may be reduced by about 10% to 80%, typically about 40% to 70%. Use of a lower frying time has an advantage that one or both of uptake of oil and penetration of oil into the coating layers and substrate may be reduced. The ability to adjust the frying time allows the degree of crispness of the product to be controlled in the event that a lesser degree of crispness is preferred than may be necessary for a fully fried product.

An advantage of use of HPP is that the pasteurisation acts instantaneously and uniformly throughout the mass of the food product independent of the shape, size and composition of ingredients.

Products in accordance with this invention find particular application as ovenable ready-made meals, for example for in-flight catering.

In a preferred aspect of this invention, the method of producing a fried, microwaveable, coated food product comprises the successive steps of:
providing a portion of a solid or solidified substrate;
coating the portion with a primary aqueous coating liquid to form a primary coated portion;
applying a coating of bonding crumb to the primary coated portion to form a bonding crumb coated portion;
applying a secondary aqueous coating liquid to the bonding crumb coated portion to form a secondary coated portion;
applying a coating of coating crumb to the secondary coated portion to form a breaded portion;
heating the breaded portion to form a cooked breaded portion;
hermetically packaging the cooked portion; and
treating the packaged cooked portion by high pressure processing.

Preferably the portion is cooked by frying to produce a fried portion.

The product may be frozen, chilled or maintained at ambient temperatures for transportation and storage after packaging and treatment by HPP. This may not be necessary for all products, particularly cool-line products.

In a further preferred aspect of the present invention a method of controlling the binding and sterilisation of a coating in a breaded product comprises use of a method in accordance with a previous aspect of this invention.

Preferably the primary coating liquid and the secondary coating liquid contain less than 10 wt%, preferably less than 5 wt% flour.

The primary aqueous coating liquid may contain at least 0.05 wt%, preferably 0.1-1 wt% of cellulose ether. The cellulose ether is preferably methyl cellulose.

The primary aqueous coating liquid may contain at least 0.03 wt%, preferably 0.05-1 wt% egg protein.

The primary aqueous coating liquid may contain at least 0.05 wt%, preferably 0.01-1 wt% of a gum selected from: xanthan gum, guar gum, locust bean gum, carrageenan gum and combinations thereof. Use of xanthan gum is especially preferred.

The primary aqueous coating liquid may contain at least 0.1 wt%, preferably 0.15-2 wt% of modified starch.

The primary aqueous coating liquid may contain 0.5-19 wt% of a dispersed oil phase.

The primary aqueous coating liquid may contain at least 80 wt% water.

The secondary aqueous coating liquid may contain at least 0.05 wt%, preferably 0.1-1 wt% cellulose ether.

The secondary aqueous coating liquid may contain at least 0.03 wt%, preferably 0.05-1 wt% egg protein.

The secondary aqueous coating liquid may contain at least 0.05 wt%, preferably 0.01-1 wt% of a gum selected from: xanthan gum, guar gum, locust bean gum, carrageenan gum and combinations thereof. Use of xanthan gum is especially preferred.

The secondary aqueous coating liquid may contain at least 0.1 wt%, preferably 0.15-2 wt% of modified starch.

The secondary aqueous coating liquid may contain 0.5-19 wt% of a dispersed oil phase.

The secondary aqueous coating liquid may contain at least 80 wt% water.

Preferably both the bonding crumb and the coating crumb comprise a milled farinaceous dough extrudate containing about 0.05wt% to about 5 wt% of added hydrocolloid.

The term "added hydrocolloid" as used herein refers to hydrophilic polymers that are not naturally present in the farinaceous component of a dough extrudate and that are capable of increasing the viscosity of an aqueous medium to which they have been added. These hydrophilic polymers are suitably selected naturally occurring gums.

Alternatively, the aqueous coating compositions are not batter compositions. The primary and secondary aqueous coatings contain less than 10 wt% flour. Preferably flour is not present in the primary or secondary aqueous coatings.

In alternative embodiments of the invention, the aqueous coating is a batter, that is a flour containing composition.

The term aqueous coating refers to a coating which is applied in the form of an aqueous coating composition before frying.

Food products in accordance with the preferred aspect of this invention have the advantage that the fried coating may have a weight which forms a smaller proportion of the total weight and which may be thinner than a similar product having a flour containing more than 10wt% batter coating layer. The coating may be crisper and may not exhibit the dough-like taste and texture of a typical battered product. Crispness of the final product may be enhanced.

Percentages and other quantities referred to in this specification are by weight and unless stated otherwise are selected from any ranges quoted to total 100%.

The primary aqueous coating, where present, may comprise:

| | |
|---|---|
| cellulose gum | 15-35wt% |
| modified starch | 15-35wt% |
| hydrocolloid | 20-30wt% |
| protein component | 10-20wt% |
| Total | 100wt% |

Preferably the primary aqueous coating comprises

| | |
|---|---|
| cellulose gum | 20-30wt% |
| modified starch | 20-40wt% |
| hydrocolloid | 20-40wt% |
| egg albumen | 10-30wt% |
| Total | 100wt% |

A particularly advantageous primary aqueous coating composition comprises

| | |
|---|---|
| cellulose gum | 25% |
| modified starch | 35wt% |
| xanthan gum | 25wt% |
| egg albumen | 15wt% |
| Total | 100wt% |

The dry ingredients may be dissolved in water to produce a viscous or gel-like solution. Typically the solution may contain 0.7% to 1.2%, preferably 1%, by weight of the dry ingredients.

The balance of the coating composition may be water, although vegetable oil, for example in an amount of 5wt% may be used as a heat transfer medium, allowing the coating to be heated to a higher temperature during frying.

Application of a coating of bonding crumb is facilitated by the use of the primary aqueous coating liquid since the crumb particles may not adhere sufficiently to a dry substrate. The application of the primary aqueous coating offers the additional advantage that it may reduce loss of moisture and uptake of oil by the substrate during frying due to stabilising properties of the aqueous composition. Use of a conventional flour or breadcrumb based predust in place of the aqueous composition would not cause the crumb to adhere sufficiently to the substrate and would confer absorbent properties rather than moisture resistance as achieved by the present invention.

The aqueous primary or secondary coating liquids preferably have a minimum viscosity of 300 cP, measured using a Brookfield viscometer with a number 3 spindle at 60 rpm at 10°C. More preferably, the viscosity lies within the range of 350-450 cP, more preferably in the range of 380-420 cP.

The bonding crumb may have a dimension less than 0.8mm and may be provided as a component of a bonding crumb composition which comprises the extruded crumb together with a polyglucose component and optional further ingredients. A preferred polyglucose component is maltodextrin, although a mixture of maltodextrin and polydextrose may be used. An amount of about 1wt% to about 15wt%, of polyglucose component, preferably about 7wt% to about 13wt%, more preferably about 10w.% may be employed. The bonding crumb composition may comprise about 70 wt% to about 90wt%, preferably about 75wt% to about 85wt%, typically 81 wt% of the extruded crumb by dry weight.

The primary coating composition may further comprise a pH adjuster, for example sodium carbonate. A typical amount may be about 2wt%. The pH of the composition may be between pH4 and pH7, typically about pH 5.

The bonding crumb composition may further include an oleophilic carrier mixed with the crumb particles, for example an edible oil, preferably a vegetable oil in an amount of about 1wt% to about 5 wt%, preferably about 2 wt%.

The weight of the bonding crumb composition may be 5-15wt%, preferably 6-10wt%, for example about 8wt% relative to the weight of the substrate.

The bonding crumb composition may be applied as particles or as a powder using a conventional crumb applicator so that the composition, when applied, forms a complete shell covering the entire surface of the substrate.

The secondary aqueous coating, where present, may comprise an aqueous mixture of water and the following ingredients by dry weight:

| | |
|---|---|
| cellulose gum | 15-35wt% |
| modified starch | 15-35wt% |
| hydrocolloid | 20-30wt% |
| protein component | 10-20wt% |
| | 100% |

The ingredients may be combined in water to provide a solution containing about 0.7wt% to about 1.2wt%, preferably about 1.0wt%, of solids in an aqueous solution.

Preferably the secondary aqueous coating comprises:

| | |
|---|---|
| cellulose gum | 20-30wt% |
| modified starch | 20-40wt% |
| hydrocolloid | 20-40wt% |
| egg albumen | 10-30wt% |
| | 100% |

A particularly advantageous secondary coating composition comprises

| | |
|---|---|
| cellulose gum | 25wt% |
| modified starch | 35wt% |
| xanthan gum | 25wt% |
| egg albumen | 15wt% |
| | 100% |

Vegetable oil in an amount of about 1wt% to about 10wt%, preferably about 5wt%, may be added to the coating solution.

The pickup of the secondary coating composition may be about 8wt% to about 16wt%, typically about 12wt% of the weight of the bonding crumb coated portion.

Any excess of the aqueous coating composition may be removed using an air knife or other blower.

One or more layers of outer crumb may be applied to the secondary coating, typically to give an amount by weight of 20wt% to 40wt% of the substrate.

In preferred embodiments of this invention the formulations consist essentially of the ingredients recited, in the sense that any additional ingredients are not present in a sufficient amount to affect the essential properties and characteristics of the product. In further embodiments the products consist only of the recited ingredients.

Use of a coating process in accordance with the preferred aspect of this invention confers several advantages particularly in comparison to conventional battered and crumbed products. A primary advantage is that the crumb components of the coating are not damaged or destroyed by sterilisation using HPP. When a non-flour containing coating is used, the breaded crust may be lighter and thinner than for a battered product. For example the weight of the crumb may be about 10% to about 50%, typically about 35% to 40%, of the weight of a battered coated substrate. The reduced amount of crust results in a reduced amount of starch providing a less starchy taste, allowing the flavour and texture of the crumb and substrate to be more readily appreciated by a consumer.

The use of a hydrocolloid-containing milled dough extrudate in both the bonding crumb and the coating crumb coating offers a further advantage that, together with the aqueous coating layers, these crumb coatings form a shell which is not damaged by use of HPP and which may act as a barrier to penetration of oil into the core of the portion during the prolonged period of frying. Thus, the two crumb layers made of the aforementioned milled dough extrudate produce a fully cooked fried product having a relatively low fat content. Surprisingly, this lower fat content has virtually no adverse effect on the eating quality of the coated food product that is obtained by the present method. Typically, the fried coating of the coated food product has a fat content that is substantially lower, for example at least 10% lower, than that of a coated food product that is identical except for the fact that it was prepared using ordinary crumb. The coating may have a fat content of less than 20w.%, more preferably a fat content of about 2wt% to about 15wt%, and most preferably of about 4wt% to about 12wt%. Alternative products when required may have a higher fat content for example in the range from 20wt% to 40wt%. Here the term fat refers to lipids selected from; triglycerides, diglycerides, monoglycerides, free fatty acids, phospholipids and mixtures thereof.

The coating of the present food product possesses unique properties. Not only does this coating absorb fat during frying, but it also may absorb a reduced amount of water. Furthermore, the fried coating may be very stable in the presence of humidity. Stability is enhanced by the increased bonding of the crumb to the substrate due to the HPP treatment conditions. This special quality explains why steam that is produced during microwave reheating of the edible core can escape from the product without causing the fried coating to become unacceptably soggy. Thus, the fried coating of the present food product typically has a water content of not more than 10wt%, more preferably of not more than 5wt%, after microwave reheating. Here the water content refers to the water content after microwave reheating to a core temperature of 80°C.

Oil may be absorbed between the crumb particles, and protects the crumb particles from excessive contact with moisture reducing water migration into the coating during freezing, storage and reheating. By this means crispness of the coating is maximised.

The milled extrudate that is contained in the inner crumb layer typically has a mass weighted average particle size of less than 2 mm. More preferably, the milled extrudate in the inner crumb layer has a mass weighted average particle size of less than 1.8 mm, more preferably 0.1 to 1.5 mm, even more preferably 0.15 to 1 mm, and most preferably 0.25 to 0.9 mm.

Typically, the inner crumb layer has a weight of 1 to20% of the weight of the fried product. Even more preferably, the inner crumb layer represents about 2wt% to about 10wt% most preferably about 3wt% to about 8wt% of the fried product.

The particle size distribution of the crumb and the milled extrudate can suitably be determined by use of a set of sieves of different mesh sizes in a manner well-known to a person skilled in the art.

The milled extrudate that is employed in the inner crumb layer preferably contains not more than a minor amount of particles having particle size in excess of 1.5 mm. Preferably, not more than 5wt% of the milled extrudate comprised in the inner crumb layer has a particle size of more than 1.5 mm, preferably of more than 1.2 mm.

The milled extrudate that is contained in the coating crumb layer preferably has a mass weighted average particle size of 0.5 to 3 mm, more preferably 1 to 3 mm.

The inner bonding and outer coating crumb layers of the frozen, microwaveable product may contain minor amounts of other crumb material besides the milled farinaceous dough extrudate. The inner crumb layer preferably contains at least 80 wt%, most preferably at least 90wt% of the milled farinaceous dough extrudate. Likewise, the outer crumb layer contains at least 80 wt%, most preferably at least 90wt% of the milled farinaceous dough extrudate. In preferred embodiments no other crumb materials are present in order to maximise the moisture resistance of the coating.

Typically, the outer coating crumb layer has a weight equal to about 3wt% to about 40wt% of the weight of the fried product. Even more preferably, the coating crumb layer has a weight of about 10wt% to about 35wt%, most preferably of about 15wt% to about 30wt% of the fried product, said percentages being dependent on the shape and dimensions of the product.

The milled extrudate that is employed in the coating crumb layer preferably contains not more than a small amount of fines. Typically, not more than 5wt% of the milled extrudate in the outer crumb layer has a particle size of less than 0.5 mm, preferably of less than 0.8 mm. The absence of fines or dust allows complete coating of the substrate surface with crumb of the desired particle sizes. The presence of fines or dust may prevent or reduce adhesion of the desired crumb onto the substrate by coating the surface thereof.

Microwaveable products of particularly good quality can be obtained by employing a relatively fine milled extrudate in the bonding crumb layer and a relatively coarse milled extrudate in the coating layer. Accordingly, in an especially preferred embodiment of the present food product, the milled extrudate that is contained in the coating crumb layer has a mass weighted average particle size that is at least 50% higher, more preferably at least 100% higher and most preferably 200% to 500% higher than the mass weighted average particle size of the milled extrudate that is contained in the bonding crumb layer.

The fried coating on one side of the present food product preferably has an average thickness of 1 to 8 mm, more preferably of 1.5 to 5 mm, and most preferably of 1.8 to 4 mm.

The invention provides a packaged microwaveable product, that is, a product which has been cooked, packaged and sterilised and which can be reheated in a microwave or combination microwave/thermal oven to give a satisfactory product with a succulent core and crisp intact crumb coating. Products of this invention may be also reheated using a conventional thermal oven.

The core of cooked edible material preferably has a weight equal to about 50wt% to about 95wt.% and the fried coating has a weight equal to about 5wt% to about 50wt% of the total weight of the food product.

The coated food product of the present invention is suitably prepared by frying the product for a sufficiently long time to ensure that the edible material that makes up the core is fully cooked. The fried product may be further cooked in an oven if necessary, for example for large or bulky products. Thus the product can simply be reheated in a microwave without the need for further heating for a sufficiently long period as necessary to completely cook it. The product of this invention may withstand such a prolonged period of frying without detriment. In contrast, conventional coated products may be damaged by prolonged frying.

The portions of solid or solidified substrate that are coated with the aqueous precoating liquid may be solid at ambient temperature or, alternatively, they may be liquid or paste-like at ambient temperature. In the latter case, that is, if the substrate is not solid at ambient temperature, the substrate is cooled to a sufficiently low temperature to render it solid, before applying the precoating liquid.

The present method may suitably be used to produce coated food products from portions of solid substrate have a weight in the range 5 to 300g. Preferably, the portions of solid substrate have a weight in the range of 10 to 50g.

The portions of the substrate may be whole portions, for example whole muscle portions such as individual steaks or fillets or larger pieces which may be cut into individual portions after cooking or reheating. Alternatively the pieces may comprise chopped or comminuted pieces, for example, nuggets or minced products which may be pressed or otherwise reconstituted into larger portions. Use of pieces with uniformly sized and weighted cores is preferred.

The solid or solidified substrate may be extruded using a die into portions, for example on a wire mesh conveyor. The temperature of the extruded portions may be in the range of -6 to 6°C preferably of -4 to -1°C to stiffen the substrate to facilitate handling during the subsequent processing steps.

The substrate, especially if it is composed of chopped or comminuted pieces, is preferably impregnated with an aqueous or particulate stabiliser composition, for example by soaking, permeation or injection (for example vacuum pulse injection) into the substrate prior to forming into portions. Examples of suitable stabiliser compositions can be found in WO 97/03572, the disclosure of which is incorporated herein by reference for all purposes. The substrate may be impregnated with the stabiliser composition to the extent that the ingredients are distributed throughout the substrate or impregnate the bulk of the substrate structure. Impregnation may be achieved by soaking, permeation or injection into the substrate prior to forming into portions.

The present method may suitably carried out using a crumb coating apparatus that comprises a first endless conveyor and a second endless conveyor located below the downstream end of the first conveyor, and beneath a flow of fine crumb particles so that portions fall from the first conveyor onto a layer of particles on the second conveyor. The second conveyor may pass through a curtain of fine crumb falling onto the conveyor surface so that the portion falls onto the crumb causing the crumb to adhere to the surface layer of the aqueous precoating, and is then coated by the falling curtain of crumb particles. The apparatus may comprise a dispenser having an outlet extending across of the conveyor to provide the curtain of fine crumb extending across the path of the portions on the conveyor. A roller may be located above the conveyor on the exit side to bear on the coated portion to improve adhesion of the fine crumb.

Crumb may be applied in excess to the portion using a crumb applicator for example a CrumbMaster (trade mark of CFS). The crumb coated portion may be passed through a roller to improve adhesion.

The total amount of aqueous precoating liquid, batter and crumb that is applied onto the portion in the present method is preferably such that, after frying, the fried portion has a weight that exceeds the weight of the uncoated portion of solid substrate by 25 to 100%, preferably by 30 to 60%.

The breaded portion may be fried to cook the substrate and coating layers. The period of cooking is preferably sufficient to completely cook the substrate preventing any health risk in the event that a product is insufficiently reheated in a microwave oven. A comparatively long period of reheating in a microwave oven is undesirable since the substrate is heated from the inside by the microwave energy resulting in a loss of moisture. This may lead to a dry core and damage to the coating layers.

A homogeneous outer crumb coating, with none of the underlying batter layer being exposed is advantageous to provide a uniformly browned appearance after a prolonged period of frying. This may be compared to a product obtained after a shorter period of frying as commonly used for conventionally thermally cooked breaded products.

The bonding crumb that is bound by the aqueous precoating may form a stabilising thermal barrier underlying the secondary coating layer and the second coating of crumb may provide a barrier to escape of moisture and ingress of oil during a prolonged frying stage. The coating layers may also serve to protect the surface of the substrate from excessive local heating during frying.

For conventional thermally cooked breaded products such as chicken nuggets, a short period of frying, for example 90 seconds or less, has been followed by a further period of cooking in a hot air oven. This is disadvantageous for microwave cookable products because the core of the substrate may not be thoroughly cooked during reheating from the frozen state. Prolonged heating of conventional products in a microwave oven leads to excessive loss of moisture and consequent damage to the coating layers.

During the frying step the breaded portion, optionally after having been coated with one or more additional crumb layers, is preferably contacted with the hot oil for 120-300 seconds, more preferably for 130 to 240 seconds, most preferably for 140 to 180 seconds. A typical frying time is 150 seconds.

The hot oil that is used for frying the breaded portion preferably has a temperature of 160 to 200°C, more preferably 170 to 195°C and most preferably 180 to 185°C.

The oil employed preferably is a vegetable oil. The term "vegetable oil" encompasses non-modified vegetable oils, hydrogenated vegetable oils, fractions of vegetable oils (for example olein or stearin fractions), interesterified vegetable oils and combinations thereof.

Preferably the core temperature of the fried portion after frying is greater than 72°C, more preferably greater than 74°C.

Frying in accordance with this invention is advantageous in comparison to flash frying followed by hot air cooking as the latter may not give a coating with desired hardness without moisture loss from the core. However a hot air oven such as an oven belt cooker, may be used to further cook larger products in cases where the frying time is insufficient to fully cook the products, for example for bone-in products or whole muscle products such as chicken breast fillets.

The breaded portion is suitably fried by immersing the breaded portion in the hot oil, for example by passing it through a bath of hot oil by means of a conveyor belt. The frying apparatus preferably comprises a double layer of parallel endless belts both layers passing beneath the oil surface, a portion carried on the lower layer being prevented from floating during frying by contact with the upper layer. The belts may comprise wire screens or other perforated configurations.

The invention is further described by means of example, but not in any limitative sense.

### Example 1 - Preparation of Crumb

A hydrocolloid containing crumb was produced by extrusion of a farinaceous dough mixture using the process disclosed in WO2010/001101.

A flour composition was prepared as follows:

| Ingredient | % |
|---|---|
| flour mixture | 96.4% |
| sodium bicarbonate (Bex baking powder) | 2.0% |
| glyceryl monostearate | 0.6% |
| salt | 1.0% |
| | 100% |

The gelling agent was as follows:

| Ingredient | % |
|---|---|
| guar gum | 67% |
| sodium metabisulphite | 33% |
| | 100% |

The gelling agent was hydrated at 3% in 97% water. This was done using a high shear mixer. The hydrated mix was left to stand for at least 12 hours after mixing.

### Example 2: Stabiliser Composition

A stabiliser composition was prepared using the following ingredients:-

| Ingredient | % |
|---|---|
| cellulose gum (Methocel™ A4M) | 15.0 |
| modified starch (Thermflo™) | 24.0 |
| polydextrose | 40.0 |
| xanthan gum | 6.0 |
| egg albumen | 15.0 |
| Total | 100.0 |

The composition was dissolved in water to produce a solution with a concentration suitable to stabilise the particular substrate in use. To this end the dry powder mixture was partially hydrated in a tub and then poured into a bowl chopper. The bowl chopper was then run for two to three minutes until the mixture was fully hydrated. The mixture can be hydrated directly in the bowl chopper if required. Alternatively, the stabiliser may be hydrated using a high shear mixer fitted with a general purpose head.

This general purpose formula may be modified to increase its efficiency in specific substrates. The above formula may be modified by addition of citric acid (up to 1 %) and ascorbic acid (up to 2%) with the polydextrose (Litesse II (Trade Mark)) being reduced accordingly.

### Example 3 - Impregnation of Substrate with Stabiliser Composition

A chicken mixture for chicken dippers or nuggets was prepared with the following composition which was prepared as a dry mixture, as an alternative to use of a hydrated stabiliser composition. The stabiliser of Example 2 was used.

| Ingredient | % |
|---|---|
| chicken emulsion | 20% |
| skin - 3mm | 18% |
| chicken breast - 10mm | 50% |
| water | 2% |
| rusk | 2% |
| stabiliser (Example 1) | 5% |
| seasoning | 3% |
| | 100% |

The chicken breast was chilled to -3°C and minced using a 10mm plate. After mincing, the temperature was 0-3°C. Water was added with mixing. A chicken emulsion comprising the following ingredients was added with mixing:

| Ingredient | % |
|---|---|
| chicken skin | 44% |
| water | 44% |
| soya isolate | 11% |
| salt | 1% |
| | 100% |

The stabiliser in accordance to Example 2 was added and mixed thoroughly. Rusk was added with mixing following by seasoning. A dry powder flavouring was preferred. The composition was allowed to dissolve in use in water which was present in the substrate in order to form an aqueous stabiliser solution in situ.

A vacuum was applied to the mixture to consolidate the structure following which the chicken mixture was chilled to -3°C and formed into shaped pieces.

A similar procedure was used for other comminuted meat products. Large particulate cores may be manufactured using a similar method.

### Example 4 - Primary Aqueous Coating Liquid

The following mixture was prepared:

| Ingredient | % |
|---|---|
| modified starch (Thermflo) | 35% |
| thickener (Methocel A4M) | 25% |
| xanthan gum | 25% |
| egg albumen | 15% |
| | 100% |

The mixture was dissolved in water to form a 1% solution using a CFS Scanbrine mixer with paddle agitation. The solution was left to stand for a period of 1 hour to 24 hours to form a fully hydrated gel or viscous solution.

A pump is necessary to run the machine but after a short while bubbles may form in the gel solution in the applicator. To prevent this problem food grade anti foaming agents can be used. Polydimethylsiloxane is preferred but calcium alginate, methyl ethyl cellulose, methylphenylpolysiloxane or polyethylene glycol can be used.

### Example 5 Secondary Aqueous Coating Liquid

A secondary coating composition was prepared by mixing the following ingredients:

| Ingredient | % |
|---|---|
| modified starch (Thermflo) | 35% |
| thickener (Methocel A4M) | 25% |
| xanthan gum | 25% |
| egg albumen | 15% |
| | 100% |

The mixture was dissolved in water to form a solution containing 1 % of the listed dry ingredients.
(a) A secondary coating liquid was prepared by mixing the following ingredients:-

| Ingredient | % |
|---|---|
| composition of Example 5(a) | 1% |
| vegetable oil | 5% |
| water | 94% |
| | 100% |

### Example 6 - Production of Chicken Croquettes

Stabilised substrates prepared in accordance with Example 2 were coated with a primary aqueous coating liquid as described in Example 4. A fine crumb coating as described in Example 1 was applied followed by a secondary aqueous coating liquid as described in Example 5.

Next, a coating of the coarse crumb of Example 1 (particle size 3-4mm) is applied using a CrumbMaster applicator manufactured by CFS, Bakel, Netherlands.

Following application of the first and second crumb layers the coated substrates entered a fryer. Oil contained in an elongate reservoir was heated to a constant temperature of 180 to 188°C. Pure rapeseed oil was employed.

Parallel upper and lower conveyors were used to prevent the substrate pieces from floating during passage through the fryer. A frying time of 2 minutes 30 seconds may be used although this may be varied dependent on the weight and size of the particles. After frying the core temperature of the particles was in the range 74 to 85°C. A small loss of weight was observed due to loss of water from the substrate but this is mostly compensated for by an uptake of oil.

### Example 7 - High Pressure Processing

Chicken croquettes prepared in accordance with Example 6 were packaged under reduced pressure in gas impermeable polymeric bags. Polymeric sheet material including an ethylene vinyl alcohol barrier layer may be employed in accordance with conventional packaging practice. The bags were sealed hermetically and were placed into baskets for high pressure processing using an Avure AV40X food processing machine. The pressure vessel was prefilled with water at 4°C. The packages were pressurised to 6000 bar for 180 seconds. The pressure was released, the water drained and the baskets of products were unloaded. The total processing time was 3 minutes.

The processed products were compared to identical products which had not been high pressure processed. A further control involved products made by the same method but using standard commercial breadcrumb which had not been impregnated with hydrocolloid, which products had been subjected to high pressure processing.

The products of Example 6 had an unchanged appearance in comparison to products which had not been subjected to high pressure processing. The colour and texture of the crumbs were unchanged.

In comparison the control using conventional commercial breadcrumb was observed to have a crumb layer which was loose in texture and much smoother in appearance. The characteristic articulate structure of the crumb was no longer evident.

The products were examined by a qualified tasting panel. Further samples were stored at room temperature and were examined after periods of three months and six months. Microbiological and sensory analysis were carried out. The products from Example 6 were fully satisfactory immediately after analysis and after periods of three months and six months. The products remained sterile and were suitable for consumption. Products which were not subjected to high pressure processing degraded on storage. The products which used conventional commercial crumb lacked a crisp coating and were considered to be commercially unacceptable.

## Claims

1. A method of manufacture of a breaded food product comprising the steps of:
providing a solid or solidified substrate;
applying a coating to the substrate to form a coated substrate;
applying a crumb coating to the coated substrate to form a breaded portion;
heating the breaded substrate to produce a cooked breaded portion;
hermetically packaging the one or more cooked breaded portions within a flexible packaging material to produce a packaged foodstuff; and
treating the packaged foodstuff to high pressure processing at a pressure of at least 100MPa.

2. A method as claimed in claim 1, wherein the crumb coating comprises a milled farinaceous dough extrudate containing 0.05wt% to 5wt% of added hydrocolloid.

3. A method as claimed in claim 2, wherein the crumb is made by extrusion of a dough composition comprising flour, water and optional further ingredients, together with added hydrocolloid, to form a uniform distribution of the hydrocolloid throughout the extruded dough.

4. A method a claimed in claim 3, wherein the hydrocolloid is added as a aqueous solution after the flour and water have been mixed.

5. A method as claimed in any preceding claim, wherein the breaded portion is cooked by contacting with hot oil.

6. A method as claimed in claim 5, wherein the breaded portion is fried.

7. A method as claimed in any preceding claim, wherein the packaged foodstuff is heated by high pressure processing at a temperature in the range of 0°C to 120°C, preferably 10°C to 80°C.

8. A method as claimed in any preceding claim, wherein the packaged foodstuff is subjected to high pressure processing for at least 3 minutes.

9. A method as claimed in any preceding claim, wherein the at least one cooked breaded portion is sealed within the flexible packaging material under reduced pressure.

10. A method as claimed in any preceding claim, wherein the heating causes binding of the crumb coating to the substrate.

11. A method as claimed in any preceding claim, wherein the high pressure processing is carried out at a pressure between 100MPa and 800MPa.

12. A method as claimed in any preceding claim, wherein the substrate comprises at least 1wt% raw meat by weight of the edible substrate.

13. A method as claimed in any preceding claim wherein the substrate includes a liquid or fluid core.

14. A method as claimed in any preceding claim, wherein the solid substrate has a volume of 2 to 200cm^{3.}

15. A method as claimed in any preceding claim, wherein the crumb is applied to the coated substrate in an amount of 20 to 35wt% by weight of the battered substrate.

16. A method as claimed in any preceding claim, wherein the coating is an aqueous coating comprising:
| | |
|---|---|
| cellulose gum | 15-35wt% |
| modified starch | 15-35wt% |
| hydrocolloid | 20-30wt% |
| protein component | 10-20wt% |
| Total | 100wt% |

17. A method as claimed in claim 16, wherein the aqueous coating comprises:
| | |
|---|---|
| cellulose gum | 20-30wt% |
| modified starch | 20-40wt% |
| hydrocolloid | 20-40wt% |
| egg albumen | 10-30wt% |
| Total | 100wt% |

18. A method as claimed in claim 17, wherein the aqueous coating comprises:
| | |
|---|---|
| cellulose gum | 25% |
| modified starch | 35wt% |
| xanthan gum | 25wt% |
| egg albumen | 15wt% |
| Total | 100wt% |

19. A method as claimed in any of claims 1 to 16, wherein the coating is a flour containing batter.

20. A cooked breaded foodstuff obtained by a process according to any preceding claim.
